# EUROPEAN PATENT APPLICATION

(11) **EP 2 050 909 A2**
(43) Date of publication of application: **22.04.2009**
(21) Application number: 07122431.5
(22) Date of filing: 05.12.2007
(51) Int. Cl.: E05F 11/38, E05F 11/48

(54) **Stopper structure of window regulator for vehicle**

(30) Priority: 16.10.2007 KR 20070104140
(71) Applicant: HYUNDAI MOTOR COMPANY, Seoul (KR)
(72) Inventor: Park, Hoosang, 445-130, Hwaseong-si (KR)
(74) Representative: Viering, Jentschura & Partner

(57) **Abstract**

The present invention provides a stopper structure of a window regulator for a vehicle where stopper blocks (7) are fixed to guide rails (5) in a frameless door, thereby ensuring the small number of parts to be used, simple structure, simple assembly, reliable quality, and low manufacturing cost.

## Description

### CROSS-REFERENCE TO RELATED APPLICATIONS

The present application is based on, and claims priority from, Korean Application Serial Number 10-2007-0104140, filed on October 16, 2007, the disclosure of which is hereby incorporated by reference herein in its entirety.

### FIELD OF THE INVENTION

The present invention relates to a stopper structure of a window regulator that is used to actuate a window glass of a vehicle, and more particularly, to a stopper that limits the stroke of a window glass provided in a frameless door.

### BACKGROUND OF THE INVENTION

Since being restricted by a frame, a frame door of a vehicle does not need to include a stopper structure for setting the upper limit of a window glass. However, a separate stopper structure for limiting the upper limit of a window glass is required in the frameless door that does not include a frame for limiting the upper limit of a window glass.

According to a stopper structure of a window regulator for a frameless door in the related art, a stabilizer is mounted on an inner panel and a catch is mounted on a window glass. Accordingly, when the window glass moves upward, the catch is restricted by the stabilizer so that the stroke of the window glass is limited.

However, the structure, in which the stabilizer is mounted on the inner panel and the catch is mounted on the window glass as described above, has complicated configuration and includes the relatively large number of parts to be used. For this reason, there are problems in that it is difficult to ensure reliable quality and low manufacturing cost.

### SUMMARY OF THE INVENTION

Embodiments of the present invention provide a stopper structure of a window regulator for a vehicle that can ensure the relatively small number of parts to be used, simple structure, simple assembly, reliable quality, and low manufacturing cost.

According to an embodiment of the present invention, a stopper structure of a window regulator for a vehicle includes frameless doors. The stopper structure further includes glass holders, guide rails, and stopper blocks. A lower portion of a window glass is fixed to the glass holders. The guide rails guide the glass holders so that the glass holders linearly move in upward and downward directions. The stopper blocks are fixed to the guide rails. When the window glass is positioned at an upper limit position, the stopper blocks interfere with the glass holders so as to limit the lift of the glass holders.

In the above-mentioned stopper structure, a fixing hole used to fix the stopper block may be formed through the guide rail, and the stopper block may be riveted into the fixing hole.

Further, the stopper block may include a cylindrical block part, and an insertion part. The insertion part integrally protrudes from the block part so as to have a diameter smaller than the diameter of the block part, and is riveted after being inserted into the fixing hole.

The present invention provides a stopper structure of a window regulator for a vehicle that can ensure the relatively small number of parts to be used, simple structure, simple assembly, reliable quality, and low manufacturing cost.

### BRIEF DESCRIPTION OF THE DRAWINGS

For a better understanding of the nature and objects of the present invention, reference should be made to the following detailed description with the accompanying drawings, in which:
FIG. 1 is a view showing a stopper structure of a window regulator for a vehicle according to an embodiment of the present invention;
FIG. 2 is a view showing a guide rail of FIG. 1 and a stopper block fixed to the guide rail;
FIG. 3 is a cross-sectional view taken along a line III-III of FIG. 2;
FIG. 4 is a perspective view of the stopper block; and
FIG. 5 is a view illustrating the operation of the stopper structure of a window regulator according to the embodiment of the present invention.

### DETAILED DESCRIPTION OF THE PREFERRED EMBODIMENTS

A preferred embodiment of the present invention will be described hereinafter with reference to the accompanying drawings.

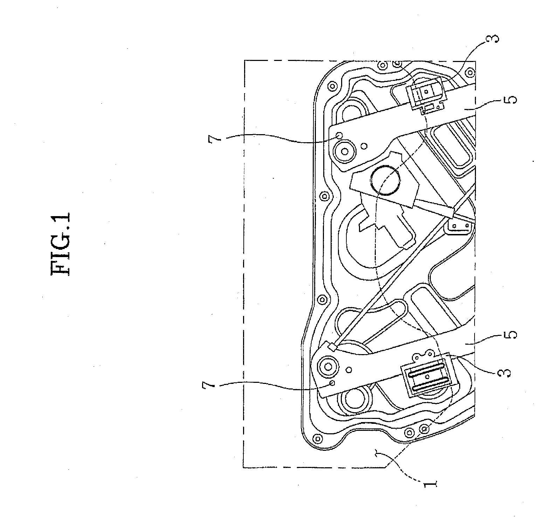

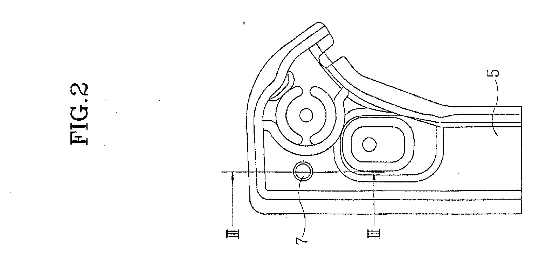

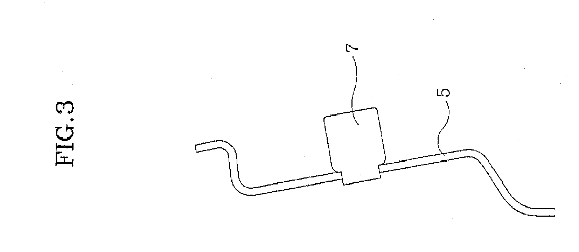

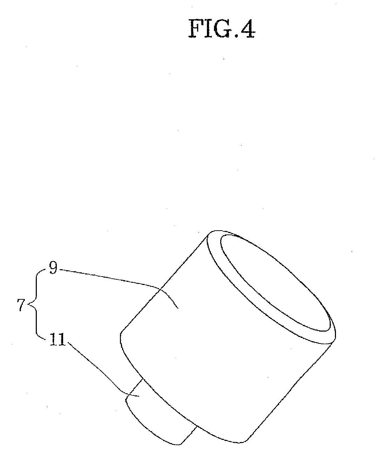

Referring to FIGS. 1 to 4, a stopper structure of a window regulator for a vehicle according to an embodiment of the present invention includes glass holders 3, guide rails 5, and stopper blocks 7. A lower portion of a window glass 1 is fixed to glass holders 3. Guide rails 5 guide glass holders 3 so that the glass holders linearly move in upward and downward directions. Stopper blocks 7 are fixed to guide rails 5, and interfere with glass holders 3 so as to limit the lift of the glass holders when window glass 1 is positioned at an upper limit position.

That is, stopper block 7 is fixed to guide rail 5 so as to limit the lifting stroke of glass holders 3, so that the upper limit of window glass 1 is set.

In this embodiment, a fixing hole used to fix stopper block 7 is formed through guide rail 5, and stopper block 7 is riveted into the fixing hole.

Each of stopper blocks 7 includes a cylindrical block part 9, and an insertion part 11 that integrally protrudes from block part 9 so as to have a diameter smaller than the diameter of block part 9 and is riveted after being inserted into the fixing hole. That is, since insertion part 11 is riveted after being inserted into the fixing hole of guide rail 5, it is possible to easily perform assembly.

Naturally, stopper blocks 7 may be preferably fixed to front and rear guide rails 5, respectively, so as to limit the lift positions of front and rear glass holders 3 at the same time.

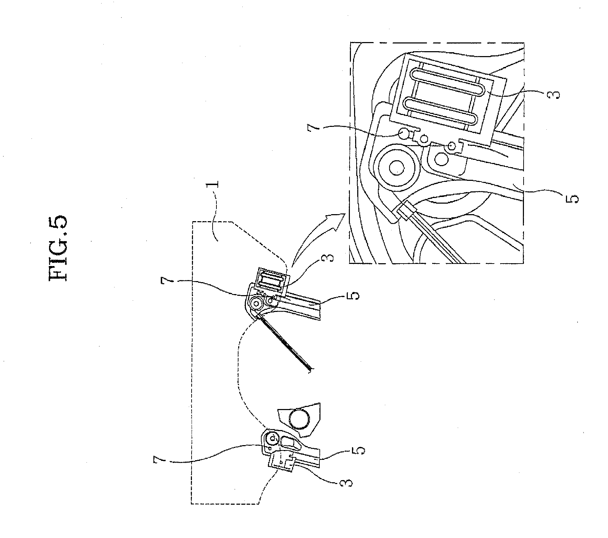

According to the stopper structure of a window regulator for a vehicle of the present invention, which is configured as described above, when window glass 1 moves upward and reaches the upper limit position as shown in FIG. 5, glass holders 3 are caught by stopper blocks 7 fixed to guide rails 5. As a result, the lift of window glass 1 is limited.

As described above, the structure of a window regulator stopper according to the embodiment of the present invention includes stopper blocks 7, which are simply fixed to guide rails 5, in addition to guide rails 5 and glass holders 3 that are essential to lift window glass 1, so that a structure of a window regulator stopper of a frameless door is reliably obtained. As a result, it is possible to ensure low manufacturing cost, simple assembly, and reliable operation.

## Claims

1. A stopper structure of a window regulator for a vehicle including frameless doors, the stopper structure comprising:
glass holders to which a lower portion of a window glass is fixed;
guide rails guiding the glass holders so that the glass holders linearly move in upward and downward directions; and
stopper blocks fixed to the guide rails, the stopper blocks interfering with the glass holders so as to limit the lift of the glass holders when the window glass is positioned at an upper limit position.

2. The stopper structure as defined in claim 1, wherein a fixing hole used to fix the stopper block is formed through the guide rail, and
the stopper block is riveted into the fixing hole.

3. The stopper structure as defined in claim 2, wherein the stopper block includes:
a cylindrical block part;
an insertion part that integrally protrudes from the block part so as to have a diameter smaller than the diameter of the block part and is riveted after being inserted into the fixing hole.
